# EUROPÄISCHE PATENTSCHRIFT

(11) **EP 2 411 694 B1**
(45) Veröffentlichungstag und Bekanntmachung des Hinweises auf die Patenterteilung: **23.01.2013**
(21) Anmeldenummer: 10709502.8
(22) Anmeldetag: 17.03.2010
(51) Int. Cl.: F16D 65/097

(54) **TEILBELAGSCHEIBENBREMSE MIT EINER FEDERANORDNUNG ZUR LÜFTSPIELVERBESSERUNG SOWIE FEDERANORDNUNG**
PARTIALLY LINED DISC BRAKE HAVING A SPRING ARRANGEMENT FOR CLEARANCE IMPROVEMENT AND SPRING ARRANGEMENT
FREIN À DISQUE À GARNITURES PARTIELLES PRÉSENTANT UN AGENCEMENT DE RESSORT PERMETTANT D'AMÉLIORER LE JEU, AINSI QU'AGENCEMENT DE RESSORT

(30) Priorität: 25.03.2009 DE 102009001832; 26.05.2009 DE 102009022633
(43) Veröffentlichungstag der Anmeldung: 01.02.2012
(73) Patentinhaber: Continental Teves AG & Co. oHG, 60488 Frankfurt (DE)
(72) Erfinder: BACH, Uwe, 65527 Niedernhausen (DE); RITTER, Wolfgang, 61440 Oberursel (DE); VON HAYN, Holger, 61118 Bad Vilbel (DE); SUNDHEIM, Ralf, 60316 Frankfurt (DE); SEFO, Ahmed, 65931 Frankfurt/M (DE); PERLAC, Jan, 96001 Zvolen (SK); KRISTEN, Dieter, 63303 Dreieich (DE)
(86) Internationale Anmeldenummer: PCT/EP2010/053441
(87) Internationale Veröffentlichungsnummer: WO 2010/108830

(56) Entgegenhaltungen:
- EP-A1- 1 933 054
- WO-A1-92/18786
- US-A- 5 687 817
- US-A1- 2004 144 602

## Beschreibung

Eine Teilbelagscheibenbremse ist aus der EP 0 747 609 B1 bekannt und umfasst einen Bremsträger an dem zwei im Abstand zueinander angeordnete Bremsbeläge gehaltert sind, die zwischen sich eine, sich um eine Rotationsachse drehbare, Bremsscheibe aufnehmen, wobei die beiden Bremsbeläge mit einer Reibfläche der Bremsscheibe durch eine Zustellbewegung in Eingriff bringbar sind, umfassend einen verschiebbar an dem Bremsträger angeordneten Bremssattel, der die Bremsbeläge und die Bremsscheibe übergreift, und ein Gehäuse mit einer Betätigungsvorrichtung bildet, wobei die Betätigungsvorrichtung die Zustellbewegung der Bremsbeläge bewirkt, und mit wenigstens einem Federelement, das die Bremsbeläge nach einer Zustellbewegung wieder voneinander wegbewegt. Dabei ist das Federelement für die beiden Bremsbeläge einteilig ausgebildet und weist einen Bügelabschnitt auf, der die Bremsscheibe sowie die beiden Bremsbeläge zur Lüftspielverbesserung übergreift.

Eine gattungsgemäße Scheibenbremse und Federanordnung ist aus EP-A-1933 054 bekannt.

Die Gestaltung der Teilbelagscheibenbremse mit Federanordnung verursacht vergleichsweise hohen Blechverschnitt bei der Herstellung. Ein weiterer Nachteil besteht darin, dass das Gehäuse zur Anlage der Federanordnung eine definiert angepasste Anlagestelle erfordert, so dass eine Nachrüstung im Feld nicht kostengünstig durchführbar ist. Der vorliegenden Erfindung liegt die Aufgabe zu Grunde eine Federanordnung vorzuschlagen, die bei verbessertem Lüftverhalten geringe Werkstoffkosten verursacht. Eine weitere Aufgabe der Erfindung besteht darin, dass die Federanordnung möglichst einfach in einer bestehenden Großserie appliziert und bei ausgelieferten Kraftfahrzeugen im Feld durch Werkstattaufenthalte kostengünstig nachgerüstet werden kann.

Diese Aufgabe wird erfindungsgemäß durch die Merkmale von Patentanspruch 1 bzw, Patentanspruch 8 gelöst. Durch die Erfindung wird bei vergleichsweise geringem Kostenaufwand ein maßgeblicher Beitrag zur Brennstoffeinsparung bei einem Kraftfahrzeug ermöglicht, selbst wenn lediglich ein Bremsbelagwechsel vollzogen werden soll. Ausführungsbeispiels betreffen vorteilhafte Applikationen der Erfindung. Weitere Merkmale und Einzelheiten der Erfindung gehen aus Unteransprüchen zusammen mit der Beschreibung anhand der Zeichnung hervor. In der Zeichnung zeigt jeweils perspektivisch:
Fig. 1 : Teilbelagscheibenbremse im Zusammenbau ohne Bremsscheibe,
Fig. 2a-f: Einzelheiten der Befederung von einem Bremsbelag
Fig. 3a-c: Federanordnung als Einzelteil, und
Fig. 4a-c: eine zusätzliche Ausführungsform der Erfindung mehreren Ansichten.

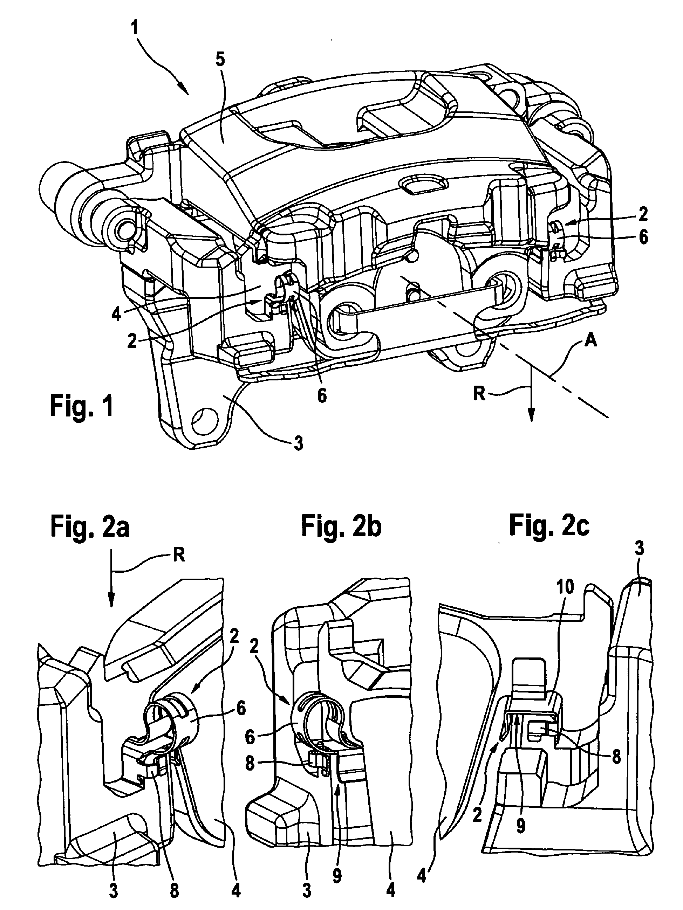

In der Fig. 1 ist eine Teilbelagscheibenbremse 1 mit einer Federanordnung 2 zur Lüftspielverbesserung verdeutlicht. Diese umfasst einen Bremsträger 3 an dem zwei im Abstand zueinander angeordnete Bremsbeläge 4 abstützbar sind. Es ist in diesem Zusammenhang weitgehend ohne Belang, ob eine gezogene Kraftabstützung der Bremsbeläge 4 im Bremsträger 3 anhand sogenannter Hammerköpfe, oder eine gedrückte Kraftabstützung der Bremsbeläge 4, oder irgend eine Mischform dieser beiden Methoden vorgesehen ist, um die auftretenden Reibkräfte oder Momente aufzunehmen. Maßgeblich ist, dass zwischen den Bremsbelägen 4 eine, um eine Rotationsachse (A) drehbare, nicht gezeigte Bremsscheibe vorgesehen werden kann, wobei die beiden Bremsbeläge 4 mit der Bremsscheibe durch eine Zustellbewegung in Eingriff bringbar sind. Weiterhin ist ein, dem Bremsträger 3 zugeordneter, Bremssattel (Typ Schwimmsattel) 5 ersichtlich, der die Bremsbeläge 4 und die Bremsscheibe zumindest teilweise übergreift, und in der Bewegungsrichtung der Bremsbeläge 4 mit einer hydraulischen, mechanischen oder elektromechanischen Betätigungsvorrichtung für die Bremsbeläge versehen ist, und parallel zur Rotationsachse A gegenüber dem Bremsträger 3 verschiebbar, also schwimmend, vorgesehen ist, wobei die Betätigungsvorrichtung die Zustellbewegung der Bremsbeläge 4 bewirkt. Es sind ohne weiteres Mischformen dieser Betätigungsformen, insbesondere sogenannte elektromechanisch/hydraulisch betätigbare Kombisättel, bevorzugt in Verwendung als elektrische Parkbremse (EPB) denkbar.

Bei den elektromechanisch betätigbaren Aktuatoriken besteht ein gewisser Vorteil darin, dass ein direkt beaufschlagter Bremsbelag (üblicherweise ein Bremsbelag auf einer sogenannten Kolben- oder Aktuatorseite) aktiv zurück gezogen werden kann, um dessen Lüftspiel aktiv einzustellen. Durch Wahl dieser Aktuatorik wird also ein Vorteil generiert, indem der verursachte Restmomentanteil durch einen direkt betätigbaren Bremsbelag aktiv minimiert werden kann. Für die zusätzliche Restmomentenverringerung eines beispielsweise mittelbar durch Gehäuseverschiebung beaufschlagten Bremsbelags, insbesondere auf einer sogenannten Faustseite, oder wenn der aktiv eingestellte Lüftspielanteil nicht ausreicht, wird die erfindungsgemäße Federanordnung 2 vorgeschlagen. Diese sieht für eine besonders kostengünstige und auch nachrüstbare Lösung vor, dass wenigstens für jeden Bremsbelag 4 eine gesonderte Federanordnung 2 mit einem gesonderten Federschenkel 6 und einem gesonderten Halteschenkel 8 vorgesehen ist, wobei der Federschenkel 6 den betreffenden Belag 4 derart elastisch in Relation zu dem Bremsträger 3 vorspannt, dass er nach einer Zustellbewegung, mit anderen Worten nach einer aktiven Bremsbetätigung, wieder von der Bremsscheibe weg bewegt wird. Prinzipiell kann auch jedem Bremsbelag 4 wenigstens eine gesonderte Federanordnung 2, bevorzugt jedoch jeweils zwei Federanordnungen 2 zugeordnet sein. Prinzipiell weist jede dieser Federanordnungen 2 wenigstens eine im Wesentlichen U-förmige Halteklammer 9 umfassend einen Basisabschnitt 10 und rechtwinklig dazu zwei weitgehend rechtwinklig abgekröpfte Schenkel 11,12 derart auf, dass die Halteklammer 9 kraftschlüssig unter Ausnutzung ihrer Federwirkung unmittelbar auf eine Schiene, Wulst oder ähnlichem vom Bremsträger 3 aufklemmbar ist. An dem Bremsträger 3 können Montagevereinfachende Konturen in Gestalt von abgeschrägten Rampen vorgesehen sein, die das Aufklipsen und Aufspreizen der Halteklammer grundsätzlich unterstützen. Mit Vorteil kann die genannte Schiene oder Wulst mit einer Hinterschneidung versehen sein, in die die Halteklammer 9 nach dem Aufspreizen derart eingreift, dass eine überwiegend kraftschlüssige Haltewirkung durch Formschluss bewirkt ist. Zur weiter verbesserten, verstärkten, Befestigung kann eine Haltekralle 13 am Schenkel 11,12 vorgesehen sein, die derart aus einer Haupterstreckungsrichtung vom Schenkel 11,12 ausgewinkelt ist, dass eine verstärkte Haltewirkung am Bremsträger 3 erzielt wird. Um die axial-elastische Rückzugs-Vorspannkraft sicher auf den Bremsbelag 4 aufzubringen, ohne dass sich die Federanordnung 2 in Betätigungsrichtung (also in Achsrichtung A) relativ zum Bremsträger 3 verschiebt, ist ausgehend von wenigstens einem der Schenkel 11,12 ein Halteschenkel 8 vorgesehen, welcher im Wesentlichen parallel mit einem Auflageabschnitt vom Federschenkel 6 vorgesehen ist, und dafür sorgt, dass die Federanordnung 2 relativ zum Bremsträger 3 festgelegt ist. Es versteht sich, dass Halteschenkel 8 und Auflageabschnitt vom Federschenkel 6 parallel zur Bremsscheibe arrangiert sind.

Alternativ zu diesen Befestigungsvariationen ist es auch denkbar, dass jede Haltekralle 13 formschlüssig in eine Ausnehmung vom Bremsträger 3 eingreift, oder dass die Federanordnung 2 mit dem Bremsträger 3 verschraubt ausgeführt ist.

Es ist weiterhin zu erwähnen, dass der Bremsbelag 4 mittelbar, also über eine Kontaktfläche vom Federschenkel und den Basisabschnitt von der Halteklammer, auf dem Bremsträger aufliegt. Bei der bevorzugten Ausführungsform untergreift der Auflageabschnitt zu diesem Zweck einen Zwischenraum zwischen einem Teil von einem sogenannten Hammerkopf und dem Bremsträger. Es versteht sich, dass eine derartige zusätzliche Freisparung in der Bemessung und Tolerierung einer Rückenplatte vom Bremsbelag 4 zu berücksichtigen ist - mit anderen Worten sind erfindungsgemäße Rückenplatten speziell auf die beschriebene Federanordnung abgestimmt. Vor diesem Hintergrund bilden Federanordnung 2 und Bremsbelag 4 eine speziell aufeinander abgestimmte und angepasste Einheit.

Durch die mittelbare Auflage zwischen Bremsträger 3 und Bremsbelag 4 ergibt sich ein günstiges metallisches Reibverhältnis mit günstigen Gleitverhältnissen im Vergleich mit konventionellen Anordnungen, bei denen die Rückenplatte vom Bremsbelag unmittelbar auf dem Bremsträger 3 aufliegt. Wenn die Federanordnung 2 weiterhin aus rostfreiem Stahlblech gefertigt ist, ergeben sich nicht nur günstige Reibbedingungen, sondern auch Vorteile durch gehemmtes Korrosionsverhalten.

Die Federanordnung 2 lässt sich im Vergleich mit der EP 0 747 609 B1, welche als zentrale Feder für ein Bremsbelagpaar vorgesehen ist, kostengünstiger herstellen, weil der Blechverschnitt minimiert wird, indem die Federanordnungen ohne Bügelabschnitt, also einzeln, jedoch zueinander jeweils versetzt, aus dem Blechwerkstoff ausgetrennt werden. Mit anderen Worten ermöglicht die versetzte und mehrstückige Gestaltung einen minimierten Blechverschnitt infolge flexibler Stanzwerkzeuggestaltung.

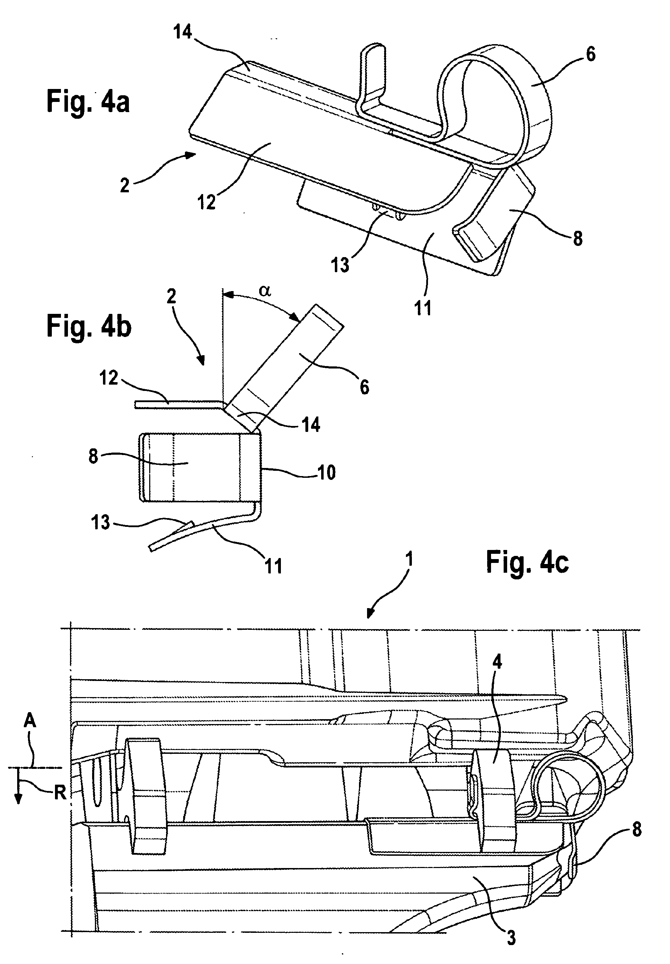

Fig. 4 verdeutlicht eine zweite Ausführungsform, von der nachstehend zur Vereinfachung nur unterschiedliche Merkmale beschrieben werden. Dabei ist der gesonderte Federschenkel 6, ausgehend von der U-förmigen Halteklammer 9, in Projektion der Drehachse A betrachtet, im Winkel α schräg abgekröpft an der Halteklammer 9 vorgesehen. Dadurch wird eine Anordnung ermöglicht, wobei die Federanordnung 2 besonders raumsparend im Wesentlichen parallel zur Kontur vom Bremsträger 3 in einen zur Verfügung stehenden Einbauraum (Spalt) zwischen Bremsträger 3, Bremsbelag 4 und Bremssattel 5 einfügt. Wie weiterhin zu ersehen ist, verfügt die Halteklammer 9 zwischen Basisabschnitt 10 und Schenkel 11,12 über einen schräg vorgesehenen Zwischenabschnitt 14, der sich ebenfalls platzsparend an eine schräg gefaste Räumkontur vom Bremsträger 3 anpasst. Als weiterer Unterschied zu der vorstehend erläuterten Ausführungsform ist vorgesehen, dass der Halteschenkel 8 ausgehend von dem Basisabschnitt 10 der Halteklammer vorgesehen ist. Folglich ist die Befestigung auf raumsparende, effiziente Art gegeben.

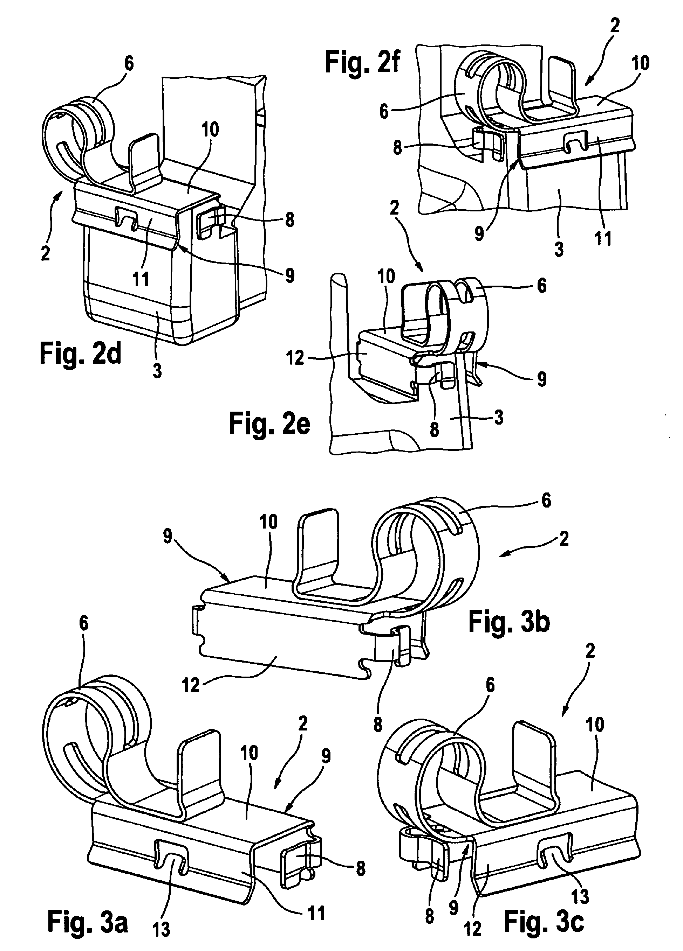

Es versteht sich, dass Mischformen mit wechselweise getauschten Merkmalen der beiden beschriebenen Ausführungsformen denkbar und ausdrücklich in den Schutzumfang einbezogen sind, auch wenn diese weiteren Ausführungsformen nicht wortwörtlich beschrieben sind. Lediglich beispielhaft sei angesprochen, dass die Ausführungsform nach den Fig. 1-3 mit einem Halteschenkel 8 gemäß der Ausführungsform nach Fig. 4 versehen sein kann, oder umgekehrt.

Die günstigen Wirkungen der Erfindung sind ganz besonders einfach erzielbar, und auch kostengünstig bei Kraftfahrzeugen im Feld nachrüstbar, indem bei diesen Kraftfahrzeugbremsen - also Kraftfahrzeugbremsen die sich im Besitz des Endverbrauchers befinden - ein Austausch vorhandener Bremsbeläge unter Verwendung sogenannter Nachrüstkits (Bremsbeläge mit erfindungsgemäßer Federanordnung) durchführbar ist. Es versteht sich, dass die Anmelderin Teilschutz in Bezug auf die Federanordnung 2 erhebt, soweit diese vereinzelt oder beispielsweise als ein Bestandteil von genannten Nachrüstkits (Bremsbelagaustauschsatz) auf dem Markt erscheinen, und soweit diese Federanordnung 2 dazu geeignet und bestimmt ist, beispielsweise im Zusammenhang mit irgendwelchen vorbekannten hydraulisch/mechanischen Teilbelagscheibenbremsen die vorteilhaften Wirkungen der Erfindung im Sinne einer Reduktion von Restbremsmomenten, entweder nur auf einer Faustseite oder sowohl auf Faustseite als auch Kolbenseite der Teilbelagscheibenbremse, zu erzielen.

### Bezugszeichenliste

- 1: Teilbelagscheibenbremse
- 2: Federanordnung
- 3: Bremsträger
- 4: Bremsbelag
- 5: Bremssattel
- 6: Federschenkel
- 7: Halteabschnitt
- 8: Halteschenkel
- 9: Halteklammer
- 10: Basisabschnitt
- 11: Schenkel
- 12: Schenkel
- 13: Haltekralle
- 14: Zwischenabschnitt

- A: Rotationsachse
- R: Radialrichtung
- α: Winkel

## Patentansprüche

1. Teilbelagscheibenbremse (1) mit einer Federanordnung (2) zur Lüftspielverbesserung umfassend einen Bremsträger (3) an dem wenigstens zwei im Abstand parallel zueinander angeordnete Bremsbeläge (4) halterbar sind, die zwischen einander eine, um eine Rotationsachse (A) drehbare, Bremsscheibe aufnehmen können, wobei die beiden Bremsbeläge (4) mit der Bremsscheibe durch eine Zustellbewegung in Eingriff bringbar sind, umfassend einen an dem Bremsträger (3) angeordneten Bremssattel (5), der die Bremsbeläge (4) und die Bremsscheibe zumindest teilweise übergreift, und in der Bewegungsrichtung der Bremsbeläge (4) mit einer Betätigungsvorrichtung gegenüber dem Bremsträger (3) verschiebbar ist, wobei die Betätigungsvorrichtung die Zustellbewegung der Bremsbeläge (4) bewirkt, wobei die Federanordnung (2) geeignet und bestimmt ist, die Bremsbeläge (4) nach einer Bremsung wieder von der Bremsscheibe weg zu bewegen, wobei jedem Bremsbelag (4) wenigstens eine gesonderte Federanordnung (2) zugeordnet ist, und wobei jede der Federanordnungen (2) wenigstens eine im Wesentlichen U-förmige Halteklammer (9) derart aufweist, dass die Halteklammer (9) am Bremsträger (3) anklemmbar ist, und zusätzlich ausgehend von der Halteklammer (9) wenigstens ein gesonderter Federschenkel (6) vorgesehen ist, der an dem jeweiligen Bremsbelag (4) angreift, wobei ausgehend von der Halteklammer (9) ein Halteschenkel (8) vorgesehen ist, der derart am Bremsträger (3) anliegt, dass eine elastische Vorspannung zwischen Bremsbelag (4) und Bremsträger (3) vorliegt, und der Bremsbelag (4) grundsätzlich elastisch in umgekehrter Betätigungsrichtung beaufschlagt ist, **dadurch gekennzeichnet, dass** der Halteschenkel (8) und der Federschenkel (6) im Wesentlichen parallel zu einer Reibfläche der Bremsscheibe angeordnet sind.

2. Teilbelagscheibenbremse (1) mit einer Federanordnung (2) nach Anspruch 1, **dadurch gekennzeichnet, dass** der Bremsbelag (4) mittelbar über einen Auflageabschnitt vom Federschenkel (6) und über einen Basisabschnitt (10) der Halteklammer (9), in Radialrichtung (R) bezogen auf die Rotationsachse (A) der Bremsscheibe, auf dem Bremsträger (3) aufliegt.

3. Teilbelagscheibenbremse (1) mit einer Federanordnung (2) nach Anspruch 2, **dadurch gekennzeichnet, dass** zwischen Auflageabschnitt und Basisabschnitt (10) eine im Wesentlichen reibungsarme, metallische Reibung zwischen identischen Reibwerkstoffen vorgesehen ist.

4. Teilbelagscheibenbremse (1) mit einer Federanordnung (2) nach Anspruch 1, **dadurch gekennzeichnet, dass** der Federschenkel (6), ausgehend von dem Basisabschnitt (10), einen etwas rechtwinklig abgekröpften Auflageabschnitt zur Anlage an dem Bremsbelag (4) aufweist.

5. Teilbelagscheibenbremse (1) mit einer Federanordnung (2) nach Anspruch 2, **dadurch gekennzeichnet, dass** die Halteklammer (9), ausgehend vom Basisabschnitt (10), wenigstens zwei Schenkel (11,12) aufweist, dass die Schenkel (11,12) parallel zueinander angeordnet sind, und wobei wenigstens einer der Schenkel (11,12) eine Haltekralle (13) aufweist.

6. Teilbelagscheibenbremse (1) mit einer Federanordnung (2) nach Anspruch 5, **dadurch gekennzeichnet, dass** die Haltekralle (13) im Vergleich mit einem Schenkel (11,12) der Halteklammer (9) derart abgewinkelt vorgesehen ist, dass eine verstärkte Haltewirkung am Bremsträger (3) vorgesehen ist.

7. Teilbelagscheibenbremse (1) mit einer Federanordnung (2) nach einem oder mehren der vorhergehenden Ansprüche, **dadurch gekennzeichnet, dass** Basisabschnitt 10, und Schenkel 11,12 der Federanordnung (2) im Wesentlichen parallel bezogen auf die Rotationsachse (A) sowie parallel zu einer Kontur des Bremsträgers angeordnet sind.

8. Federanordnung (2) für eine Teilbelagscheibenbremse (1) umfassend einen Bremsträger (3) an dem wenigstens zwei im Abstand zueinander anordbare Bremsbeläge (4) halterbar sind, die zwischen einander eine, um eine Rotationsachse (A) drehbare, Bremsscheibe aufnehmen können, wobei die beiden Bremsbeläge (4) mit der Bremsscheibe durch eine Zustellbewegung in Eingriff bringbar sind, umfassend einen an dem Bremsträger (3) anordbaren Bremssattel (5), der die Bremsbeläge (4) und die Bremsscheibe zumindest teilweise übergreift, und in der Bewegungsrichtung der Bremsbeläge (4) mit einer Betätigungsvorrichtung gegenüber dem Bremsträger (3) verschiebbar ist, wobei die Betätigungsvorrichtung die Zustellbewegung der Bremsbeläge (4) bewirkt, wobei jeweils eine Federanordnung (2) dazu bestimmt ist, jeweils einen Bremsbelag (4) nach einer Zustellbewegung von der Bremsscheibe weg zu bewegen, wobei die Federanordnung (2) eine U-förmige Halteklammer (9) umfassend einen Basisabschnitt (10) und davon ausgehend Schenkel (11,12) und einen gesonderten Federschenkel (6) zum Angriff an dem Bremsbelag (4) aufweist, wobei die Halteklammer (9) kraftschlüssig am Bremsträger (3) anclipsbar ist, und wobei die Federanordnung (2) einen gesonderten Halteschenkel (8) aufweist, der rechtwinklig zur Drehachse (A) abgewinkelt ist, und am Bremsträger (3) angreift, und dadurch die Federanordnung (2) am Bremsträger (3) in Richtung Drehachse (A) befestigt, **dadurch gekennzeichnet, dass** der Halteschenkel (8) ausgehend von einem der Schenkel (11,12) vorgesehen ist.

9. Federanordnung (2) für eine Teilbelagscheibenbremse (1) nach Anspruch 8, **dadurch gekennzeichnet, dass** der gesonderte Federschenkel (6), ausgehend von der U-förmigen Halteklammer (9), in Projektionsrichtung der Drehachse (A), im Winkel α schräg abgekröpft vorgesehen ist.

10. Federanordnung (2) für eine Teilbelagscheibenbremse (1) nach Anspruch 8, **dadurch gekennzeichnet, dass** die Halteklammer (9) zwischen Basisabschnitt (10) und Schenkel (11,12) über einen schräg vorgesehenen Zwischenabschnitt (14) verfügt.

11. Federanordnung (2) für eine Teilbelagscheibenbremse (1) nach Anspruch 8, **dadurch gekennzeichnet, dass** der Halteschenkel (8) ausgehend von dem Basisabschnitt (10) der Halteklammer (9) vorgesehen ist.

## Claims

1. Partially lined disk brake (1) having a spring arrangement (2) for improved clearance, comprising a brake anchor plate (3), mountable on which are at least two brake linings (4), which are arranged at a distance from and parallel to one another and which between them are capable of receiving a brake disk capable of rotating about an axis of rotation (A), wherein an application movement serves to bring the two brake linings (4) into engagement with the brake disk, comprising a brake caliper (5), which is arranged on the brake anchor plate (3) and which engages at least partially over the brake linings (4) and the brake disk, and which in the direction of movement of the brake linings (4) can be displaced by an actuating device in relation to the brake anchor plate (3), wherein the actuating device produces the application movement of the brake linings (4), wherein the spring arrangement (2) is suited and intended to move the brake linings (4) away from the brake disk again after braking, wherein at least one separate spring arrangement (2) is assigned to each brake lining (4), and wherein each of the spring arrangements (2) comprises at least one substantially U-shaped retaining clamp (9), in such a way that the retaining clamp (9) can be clamped to the brake anchor plate (3), and at least one separate spring leg (6), which impinges on the respective brake lining (4), is additionally provided, emerging from the retaining clamp (9), wherein a retaining leg (8), which bears on the brake anchor plate (3) in such a way that an elastic pretensioning exists between the brake lining (4) and the brake anchor plate (3), is provided, emerging from the retaining clamp (9), and the brake lining (4) is basically impinged upon elastically in the opposite actuating direction, **characterized in that** the retaining leg (8) and the spring leg (6) are arranged substantially parallel to a friction surface of the brake disk.

2. Partially lined disk brake (1) having a spring arrangement (2) according to Claim 1, **characterized in that** the brake lining (4) bears directly on the brake anchor plate (3) by way of a bearing portion of the spring leg (6) and by way of a base portion (10) of the retaining clamp (9), in the radial direction (R) relative to the axis of rotation (A) of the brake disk.

3. Partially lined disk brake (1) having a spring arrangement (2) according to Claim 2, **characterized in that** a substantially low-friction, metallic friction between identical friction materials is afforded between the bearing portion and the base portion (10).

4. Partially lined disk brake (1) having a spring arrangement (2) according to Claim 1, **characterized in that** the spring leg (6), emerging from the base portion (10), comprises a bearing portion, bent somewhat at right-angles, for bearing on the brake lining (4).

5. Partially lined disk brake (1) having a spring arrangement (2) according to Claim 2, **characterized in that** the retaining clamp (9), emerging from the base portion (10), comprises at least two legs (11, 12), that the legs (11, 12) are arranged parallel to one another, and wherein at least one of the legs (11, 12) comprises a retaining claw (13).

6. Partially lined disk brake (1) having a spring arrangement (2) according to Claim 5, **characterized in that** the retaining claw (13) is bent in relation to a leg (11, 12) of the retaining clamp (9), in such a way as to afford an enhanced retaining action on the brake anchor plate (3).

7. Partially lined disk brake (1) having a spring arrangement (2) according to one or more of the preceding claims, **characterized in that** the base portion (10), and legs (11, 12) of the spring arrangement (2) are arranged substantially parallel to the axis of rotation (A) and parallel to a contour of the brake anchor plate.

8. Spring arrangement (2) for a partially lined disk brake (1), comprising a brake anchor plate (3), mountable on which are at least two brake linings (4), which are arranged at a distance from one another and which between them are capable of receiving a brake disk capable of rotating about an axis of rotation (A), wherein an application movement serves to bring the two brake linings (4) into engagement with the brake disk, comprising a brake caliper (5), which can be arranged on the brake anchor plate (3) and which engages at least partially over the brake linings (4) and the brake disk, and which in the direction of movement of the brake linings (4) can be displaced by an actuating device in relation to the brake anchor plate (3), wherein the actuating device produces the application movement of the brake linings (4), wherein one spring arrangement (2) in each case is intended to move one brake lining (4) each away from the brake disk again after an application movement, wherein the spring arrangement (2) comprises a U-shaped retaining clamp (9) comprising a base portion (10), and emerging from this legs (11, 12) and a separate spring leg (6) for impinging on the brake lining (4), wherein the retaining clamp (9) can be frictionally clipped to the brake anchor plate (3), and wherein the spring arrangement (2) comprises a separate retaining leg (8), which is bent at right-angles to the axis of rotation (A), and impinges on the brake anchor plate (3), and thereby fastens the spring arrangement (2) to the brake anchor plate (3) in the direction of the axis of rotation (A), **characterized in that** the retaining leg (8) is provided emerging from one of the legs (11, 12).

9. Spring arrangement (2) for a partially lined disk brake (1) according to Claim 8, **characterized in that** the separate spring leg (6), emerging from the U-shaped retaining clamp (9), is bent obliquely at the angle α in the projection direction of the axis of rotation (A).

10. Spring arrangement (2) for a partially lined disk brake (1) according to Claim 8, **characterized in that** the retaining clamp (9) comprises an oblique intermediate portion (14) between the base portion (10) and the legs (11, 12).

11. Spring arrangement (2) for a partially lined disk brake (1) according to Claim 8, **characterized in that** the retaining leg (8) is provided emerging from the base portion (10) of the retaining clamp (9).

## Revendications

1. Frein à disque à garnitures partielles (1) comprenant un agencement de ressort (2) permettant d'améliorer le jeu, comprenant un support de frein (3) sur lequel peuvent être fixées au moins deux garnitures de frein (4) disposées à distance parallèlement l'une à l'autre, qui peuvent recevoir entre elles un disque de frein pouvant tourner autour d'un axe de rotation (A), les deux garnitures de frein (4) pouvant être amenées en prise avec le disque de frein par un déplacement d'avance, comprenant un étrier de frein (5) disposé sur le support de frein (3), lequel vient en prise par le dessus au moins en partie avec les garnitures de frein (4) et le disque de frein, et peut être déplacé dans la direction de déplacement des garnitures de frein (4) par rapport au support de frein (3) au moyen d'un dispositif d'actionnement, le dispositif d'actionnement provoquant le déplacement d'avance des garnitures de frein (4), l'agencement de ressort (2) étant approprié et prévu pour écarter à nouveau les garnitures de frein (4) du disque de frein après un freinage, au moins un agencement de ressort séparé (2) étant affecté à chaque garniture de frein (4), et chacun des agencements de ressort (2) présentant au moins une pince de fixation sensiblement en forme de U (9) de telle sorte que la pince de fixation (9) puisse être serrée sur le support de frein (3), et en outre, partant de la pince de serrage (9), au moins une branche de ressort (6) respective étant prévue, laquelle vient en prise sur la garniture de frein (4) respective, une branche de fixation (8) étant prévue à partir de la pince de fixation (9), laquelle s'applique sur le support de frein (3) de telle sorte qu'une précontrainte élastique ait lieu entre la garniture de frein (4) et le support de frein (3), et la garniture de frein (4) étant sollicitée essentiellement élastiquement dans la direction d'actionnement inverse, **caractérisé en ce que** la branche de fixation (8) et la branche de ressort (6) sont disposées sensiblement parallèlement à une surface de friction du disque de frein.

2. Frein à disque à garnitures partielles (1) comprenant un agencement de ressort (2) selon la revendication 1, **caractérisé en ce que** la garniture de frein (4) repose de manière indirecte par le biais d'une portion d'appui de la branche de ressort (6) et par le biais d'une portion de base (10) de la pince de fixation (9), dans la direction radiale (R) par rapport à l'axe de rotation (A) du disque de frein, sur le support de frein (3).

3. Frein à disque à garnitures partielles (1) comprenant un agencement de ressort (2) selon la revendication 2, **caractérisé en ce qu'**entre la portion d'appui et la portion de base (10) est prévue une friction métallique entre des matériaux de friction identiques, sensiblement à faible friction.

4. Frein à disque à garnitures partielles (1) comprenant un agencement de ressort (2) selon la revendication 1, **caractérisé en ce que** la branche de ressort (6), partant de la portion de base (10), présente une portion d'appui coudée approximativement à angle droit pour buter contre la garniture de frein (4).

5. Frein à disque à garnitures partielles (1) comprenant un agencement de ressort (2) selon la revendication 2, **caractérisé en ce que** la pince de fixation (9), partant de la portion de base (10), présente au moins deux branches (11, 12), **en ce que** les branches (11, 12) sont disposées parallèlement l'une à l'autre et au moins l'une des branches (11, 12) présentant une griffe de fixation (13).

6. Frein à disque à garnitures partielles (1), comprenant un agencement de ressort (2) selon la revendication 5, **caractérisé en ce que** la griffe de fixation (13), par comparaison avec une branche (11, 12) de la pince de fixation (9) est prévue sous forme coudée de telle sorte qu'un effet de fixation renforcé se produise sur le support de frein (3).

7. Frein à disque à garnitures partielles (1) comprenant un agencement de ressort (2) selon l'une quelconque ou plusieurs des revendications précédentes, **caractérisé en ce que** la portion de base (10), et les branches (11, 12) de l'agencement de ressort (2) sont disposées sensiblement parallèlement par rapport à l'axe de rotation (A) et parallèlement à un contour du support de frein.

8. Agencement de ressort (2) pour un frein à disque à garnitures partielles (1) comprenant un support de frein (3) sur lequel peuvent être fixées au moins deux garnitures de frein (4) pouvant être disposées à distance parallèlement l'une à l'autre, qui peuvent recevoir entre elles un disque de frein pouvant tourner autour d'un axe de rotation (A), les deux garnitures de frein (4) pouvant être amenées en prise avec le disque de frein par un déplacement d'avance, comprenant un étrier de frein (5) pouvant être disposé sur le support de frein (3), lequel vient en prise par le dessus au moins en partie avec les garnitures de frein (4) et le disque de frein, et peut être déplacé dans la direction de déplacement des garnitures de frein (4) par rapport au support de frein (3) au moyen d'un dispositif d'actionnement, le dispositif d'actionnement provoquant le déplacement d'avance des garnitures de frein (4), un agencement de ressort (2) étant prévu à chaque fois pour écarter du disque de frein une garniture de frein respective (4) après un mouvement d'avance, l'agencement de ressort (2) comprenant une pince de fixation (9) en forme de U comprenant une portion de base (10) et présentant des branches (11, 12) partant de celle-ci et une branche de ressort (6) séparée pour venir en prise sur la garniture de frein (4), la pince de fixation (9) pouvant être enclipsée par engagement par force sur le support de frein (3) et l'agencement de ressort (2) présentant une branche de fixation (8) séparée qui est coudée à angle droit par rapport à l'axe de rotation (A), et qui vient en prise sur le support de frein (3), et fixe de ce fait l'agencement de ressort (2) sur le support de frein (3) dans la direction de l'axe de rotation (A), **caractérisé en ce que** la branche de fixation (8) est prévue à partir de l'une des branches (11, 12).

9. Agencement de ressort (2) pour un frein à disque à garnitures partielles (1) selon la revendication 8, **caractérisé en ce que** la branche de ressort séparée (6), partant de la pince de fixation (9) en forme de U, est prévue de manière coudée obliquement suivant un angle α dans la direction de projection de l'axe de rotation (A).

10. Agencement de ressort (2) pour un frein à disque à garnitures partielles (1) selon la revendication 8, **caractérisé en ce que** la pince de fixation (9) dispose, entre la portion de base (10) et les branches (11, 12), d'une portion intermédiaire (14) prévue obliquement.

11. Agencement de ressort (2) pour un frein à disque à garnitures partielles (1) selon la revendication 8, **caractérisé en ce que** la branche de fixation (8) est prévue à partir de la portion de base (10) de la pince de fixation (9).
